# EUROPÄISCHE PATENTSCHRIFT

(11) **EP 3 260 259 B1**
(45) Veröffentlichungstag und Bekanntmachung des Hinweises auf die Patenterteilung: **16.09.2020**
(21) Anmeldenummer: 17000577.1
(22) Anmeldetag: 06.04.2017
(51) Int. Cl.: B28B 1/00, H01F 7/02, C04B 35/01, C04B 35/26, C04B 35/486, C04B 35/626, C04B 35/634

(54) **VORRICHTUNG ZUM MAGNETISCHEN GEFRIERGIESSEN VON KERAMIKEN SOWIE VERFAHREN ZUM BETREIBEN DERSELBEN**
DEVICE FOR MAGNETICALLY FREEZE MOULDING CERAMICS AND METHOD FOR OPERATING THE SAME
DISPOSITIF DE COULÉE À FROID MAGNÉTIQUE DE CÉRAMIQUES ET SON PROCÉDÉ DE FONCTIONNEMENT

(30) Priorität: 12.05.2016 DE 102016006175
(43) Veröffentlichungstag der Anmeldung: 27.12.2017
(73) Patentinhaber: Forschungszentrum Jülich GmbH, 52425 Jülich (DE)
(72) Erfinder: Balaguer Ramirez, Maria, 46170 Villar del Arzobispo, Valencia (ES); Glückler, Harald, 52428 Jülich (DE); Schulze-Küppers, Falk, 52379 Langerwehe (DE); Soltner, Helmut, 52459 Inden (DE); Meulenberg, Wilhelm Albert, 6294 AA Vijlen (NL); Ivanova, Mariya, 52428 Jülich-Stetternich (DE); Wilkner, Kai, 52428 Jülich (DE); Offermanns, Tobias, 52070 Aachen (DE); Mattonet, Gerd, 52353 Düren (DE); Guillon, Olivier, 52428 Jülich (DE)

(56) Entgegenhaltungen:
- CN-A- 101 265 121
- PORTER MICHAEL M ET AL: "Biomimetic Materials by Freeze Casting", JOM: JOURNAL OF METALS, SPRINGER NEW YORK LLC, UNITED STATES, Bd. 65, Nr. 6, 13. April 2013 (2013-04-13) , Seiten 720-727, XP035350662, ISSN: 1047-4838, DOI: 10.1007/S11837-013-0606-3 [gefunden am 2013-04-13]

## Beschreibung

Die Erfindung betrifft eine neue Vorrichtung zur Herstellung gerichtet poröser, keramischer Komponenten mit Hilfe des Gefriergusses (engl, freeze casting) im Magnetfeld, die vorteilhaft als mechanisch stabile poröse Träger in vielen Anwendungen eingesetzt werden können. Die Erfindung betrifft zudem ein neues Verfahren zur Herstellung gerichtet poröser, keramischer Komponenten mit Hilfe dieser Vorrichtung.

### Stand der Technik

Zur Herstellung poröser keramischer Komponenten, wie beispielsweise Träger für Gastrennmembranen, Festoxidbrennstoffzellen, Elektrolyseure oder andere elektrochemische Wandler, existieren verschiedene Techniken, wie beispielsweise Foliengießen, Pressverfahren oder andere Verfahren. Die Träger müssen eine ausreichende Gasdurchlässigkeit besitzen um einen Gastransport während des Betriebs an die Funktionsschicht zu gewährleisten, müssen aber auch eine ausreichende mechanische Stabilität in alle Raumrichtungen aufweisen. Bei einer der gängigsten Methoden wird das keramische Ausgangsmaterial mit einem Porenbildner als Platzhalter, beispielsweise Speisestärke, gemischt, um eine Porosität mit statistisch verteilten Poren zu generieren. Diese Methode gilt als eine der Standardmethoden zur Erzeugung von Poren in einem keramischen Bauteil. Allerdings ist bei diesem Verfahren die Möglichkeit, die Ausrichtung oder Gewundenheit der Poren nur schwer zu kontrollieren.

Zur Herstellung von porösen keramischen Komponenten, bei denen während der Herstellung eine definierte und gerichtete Struktur in der Porosität ausgebildet werden kann, bietet sich das so genannten Gefriergießen (engl. freeze casting) an. Diese Methode erlaubt die Herstellung von Keramiken mit einer gerichtet, geordneten Porosität und mit einer nahezu maßgeschneiderten Mikrostruktur. Zudem erfolgt häufig eine Verbesserung der mechanischen Stabilität zumindest in Richtung der Erstarrungsfront.

Eine Vorrichtung zum Gefriergießen einer keramischen Probe in einem magnetischen Feld mit einem Mittel zur Kühlung, eine mit dem Mittel zur Kühlung verbundenen Probeaufnahmevorrichtung sowie mit einem drehbar angeordneten Permanentmagneten ist beispielsweise aus CN 1012652121 A oder auch aus Michael M. Porter et al., "Biomimetic Materials by Freeze Casting", JoM: Journal of Metals, Springer New York LLC, United States, Bd. 65, Nr. 6, 13. April 2013 (2013-04-13), Seiten 720-727, XP035350662, bekannt.

Das Verfahren des Gefriergießens weist zudem den Vorteil auf, dass in der Regel keine Trocknungsschwindung auftritt, und dass eine sehr hohe Grünkörperfestigkeit gegeben ist, sofern man von einem Grünkörper als keramisches Substrat ausgeht. Allerdings konnte bislang eine Verbesserung der mechanischen Stabilität quer zur Erstarrungsfront damit noch nicht bewerkstelligt werden.

Bei der Erstarrung der Lösungsmittelkristalle werden die Materialpartikel (keramisch, metallisch oder Kunststoffe) zur Grenzfläche verdrängt, wo sie nach Abtrocknung des Lösungsmittels die Porenwände ausbilden. Eine verbesserte Stabilität in Richtung senkrecht zur Erstarrungsfront und damit senkrecht zur Ausrichtung der Poren führen nur wenige Entwicklungen, die die Ausbildung mikrostruktureller Verknüpfungen senkrecht zur Erstarrungsfront zum Ziel hatten, auch zum Erfolg, beispielsweise durch die Zugabe flüssiger Nanopartikel als Precursoren.

Bisherige poröse Trägerstrukturen weisen in der Regel eine statistisch verteilte Porosität auf, die dadurch entsteht, dass bei der Herstellung ein Porenbildner eingesetzt wird. Ein erster Parameter zur Verbesserung der Diffusionsleistung durch die Trägerstruktur ist daher die Vergrößerung des Porenvolumens, welches aber in der Regel zu Lasten der mechanischen Stabilität geht. Weiterhin könnte eine Reduzierung der Gewundenheit (engl. tortuosity) der auftretenden Poren zu einer Verbesserung der Diffusionsleistung führen. Je geradliniger die Porenkanäle senkrecht durch die Trägerschicht verlaufen, desto geringer ist die Weglänge und damit umso effektiver die Diffusion. Die mit konventionellen Methoden (Folienguss, Pressverfahren, etc.) hergestellten Träger zeigen jedoch keinen ausreichend schnellen Gasaustausch, wodurch die tatsächliche (Abtrenn-)Leistung weit unter der potenziellen Leistung liegt. Eine Erhöhung der Porosität, der Porenkanaldurchmesser und eine Verringerung der Gewundenheit führen darüber hinaus zwangsweise zur Verschlechterung der mechanischen Belastbarkeit, so dass konventionelle Herstellungsverfahren nicht geeignet erscheinen um Trägermikrostrukturen mit hohem Gasaustausch bei gleichzeitig hoher mechanischer Stabilität herzustellen.

Um den vorliegenden Zielkonflikt .zwischen ausreichender Stabilität auf der einen Seite und Abtrennleistung auf der anderen Seite in bisher verwendeten Membranen abzuschwächen, wurde versucht den Aufbau und das Design von mechanisch stabilen Membranen derart zu verändern, dass dennoch eine aussichtsreiche Trennrate erzielt werden konnte.

Es wurde herausgefunden, dass die Bereitstellung einer Trägerstruktur mit einer strukturierten geordneten Porosität und mit einem definierten Porenvolumen den nachteiligen Effekt einer zusätzlichen Trägerschicht auf die Abtrennrate der Membran verringern kann, gleichzeitig aber die mechanische Stabilität in die Gastransportrichtung deutlich verbessert.

Eine Erfolg versprechende Methode zur Herstellung einer strukturierten hierarchischen Porosität in einer Keramik ist das Gefriergießen (*engl. freeze-casting*). Mit diesem vielseitigen Verfahren lassen sich kontrolliert hochporöse Strukturen mit geordneten und wenig gewundenen Poren erzeugen.

Es hat sich jedoch gezeigt, dass die mechanische Stabilität von solchen gefriergegossenen, asymmetrischen Membranen insgesamt stark von der Lastrichtung abhängig ist. Insbesondere bei Trägerstrukturen mit orientierter Porosität ist die mechanische Widerstandsfähigkeit senkrecht zu den orientierten Poren häufig nicht ausreichend.

Als Lösung des Stabilitätsproblems wurde eine Verlinkung/Vernetzung der Porenwände senkrecht zur Gefrierrichtung (Porenorientierung) angesehen. Bei den vielen Versuchen, einen möglichst hohen Grad an mikrostrukturierten Verbindungen zwischen den Poren senkrecht zur Gefrierrichtung zu erzeugen, stellten sich jedoch nur einige wenige als Erfolg versprechend heraus. Dazu gehört die Zugabe von flüssigen Additiven, wie beispielsweise flüssige Vorläuferprodukte (engl. liquid-phase precursor), mit Größen im Nanometerbereich, die als Brücken oder auch zur Orientierung der Partikel eingesetzt wurden.

Obwohl auch eine direkte Ausrichtung der keramischen Partikel in dem Ausgangsschlicker machbar ist, die zu einer verbesserten mechanischen Stabilität der fertigen Keramik führt, erfordert dies an den Partikeln angreifende äußere Kräfte, wie z. B. ein starkes magnetisches Feld von über einem Tesla Feldstärke, wodurch einerseits hohe Kosten verursacht werden und andererseits ein schwerer aufwändiger apparativer Aufwand betrieben werden muss.

Eine bekannte Weiterentwicklung des Gefriergießens sieht vor, dass während des Einfrierens der Probe ein schwaches, zweidimensionales magnetisches Feld von beispielsweise ∼ 0,1 T senkrecht zur Gefrierrichtung angelegt wird, welches zu einer Ausrichtung der anisotropen Partikel in Richtung der des Magnetfeldes (senkrecht zur Porenorientierung) bewirkt. Zusammen mit der Zugabe von magnetischen Partikeln zu dem keramischen Ausgangsschlicker eröffnet dies die Möglichkeit, die mechanische Widerstandsfähigkeit von planaren und rohrförmigen Membranen durch die Ausbildung von im Magnetfeld ausgerichteten Porenwänden zu verbessern.

Dabei können auch die verwendeten Keramiken oder Rohstoffe selbst metallisch sein. Geeignete Beispiele dafür wären SrTiFe-Oxid oder SrTiCo-Oxid. Diese Materialien sind theoretisch als Mischoxide magnetisierbar.

Auch die Zugabe von metallischen Fe oder Co oder die Beschichtung der keramischen Partikel mit solchen ist denkbar, wobei die metallischen Eigenschaften bei der Formgebung genutzt werden können. Durch anschließendes Reaktionssintern werden die metallischen Komponenten oxidiert, wobei sich die gewünschten Phasen bilden und sich die funktionellen Eigenschaften, beispielsweise die lonenleitfähigkeit (O²⁻, H⁺, etc.)/Elektronenleitfähigkeit/ Mischleitfähigkeit, einstellen.

Die Mikrostruktur kann vorteilhaft exakt maßgeschneidert werden, indem unterschiedliche magnetische Materialien eingesetzt werden, die magnetische Feldausrichtung, der Kippwinkel, die Feldstärke und/oder die Rotationsgeschwindigkeit variiert und zudem die Parameter des Gefriergießens, wie zum Beispiel die Gefrierrate als Geschwindigkeit der Erstarrungsfront, die von der minimalen Temperatur Tₘᵢₙ abhängige Kristallgröße, das Lösungsmittel oder das Nukleierungsmittel (Startpunkte für das Kristallwachstum), modifiziert werden können. Dabei können insbesondere magnetische Partikel, wie beispielsweise Magnetit (Fe₃O₄) oder andere paramagnetische Perowskite, eine Ausrichtung entlang der schwachen Magnetfeldlinien bewirken.

Sowohl statische als auch drehbare und kippbare Magnetfelder, die entlang bzw. parallel zur Ebene der Gefrierfront, d. h. senkrecht zur Richtung des Eiswachstums ausgerichtet werden, können die vorhandenen magnetischen Partikel im Inneren des keramischen Schlickers ausrichten und so zu einer verbesserten mechanischen Belastbarkeit in beliebige Raumrichtungen führen. Ebenso kann die Relativbewegung der Probe zum Magnetfeld für eine Ausrichtung der Partikel und die damit verbundene Mikrostrukturierung sorgen.

Zudem können je nach beabsichtigter Anwendung weitere Verfahrensschritte nach der Herstellung, wie beispielsweise Infiltration oder auch druckunterstütztes Sintern, folgen, je nachdem ob ein vollständig ausgerichteter, dichter Keramikkörper benötigt wird.

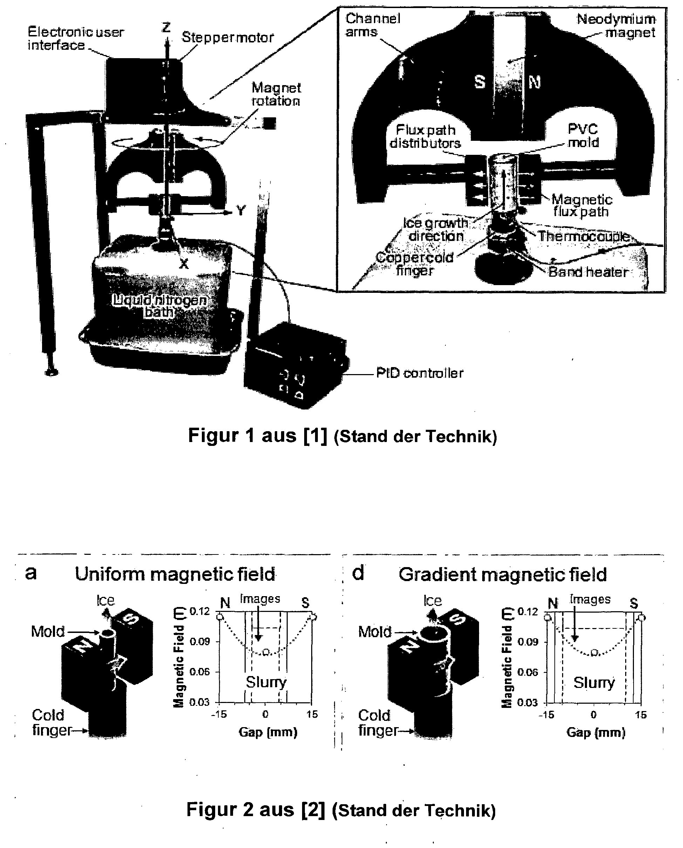

Eine Vorrichtung zur Durchführung des Verfahrens des Gefriergießens ist bereits bei Porter et al., Materials Science & Engineering A, A 556 (23012) pp. 741 - 750 [1] beschrieben und in Figur 1 dargestellt. Die Vorrichtung umfasst einen Kühlfinger aus Kupfer, der in ein Bad aus flüssigem Stickstoff eintaucht. An dem Kühlfinger sind eine Heizmanschette sowie ein mit einem PID Steuergerät verbundenes Thermoelement angeordnet, so dass die Kühlrate an der Oberfläche des Kupfers am Boden einer PVC-Form kontrolliert werden kann. Der innere Durchmesser der PVC-Form beträgt 20 mm. Um die PVC-Form ist eine in der x-y-Ebene drehbare Permanentmagnetanordnung angeordnet. Der Seltenerdenmagnet (Applied Magnets, Plano, TX) (grade N42) mit einer Remanenzfeldstärke von 1,32 T weist eine Größe von 2,5 cm x 10 cm x 10 cm auf. An diesem sind zwei gusseiserne Arme als Hufeisen, und an diesen jeweils eine mit einem Gewinde versehene rostfreie Stahlstange angeordnet. An den Enden der Stahlstangen sind jeweils Polschuhe als Magnetflussverteiler so angeordnet, dass diese benachbart zur Längsachse der PVC-Form positioniert sind. Mit dieser Vorrichtung wird ausgehend vom Seltenerdenmagnet zwischen den Polschuhen (Magnetflussverteilern) ein homogenes Magnetfeld erzeugt, welches durch die PVC-Form auf eine Probe wirkt und senkrecht zur Gefrierrichtung (z-Achse) ausgerichtet ist.

Die Feldstärke des magnetischen Feldes zwischen den Polschuhen kann dabei zwischen ca. 0 und 0,15 T variiert werden, indem der Abstand zwischen den Polschuhen über die mit einem Gewinde versehenen Stahlstangen eingestellt wird. Die geringste Feldstärke wir erreicht, wenn der maximal einstellbare Abstand, bei dem die Polschuhe direkt die gusseisernen Arme kontaktieren, eingestellt wird. Die Position, bei dem die Polschuhe nahezu die PVC-Form kontaktieren, führt in Gegenzug zur stärksten. Feldstärke.

Die Höhe der Magnetflussverteiler in z-Richtung und der Abstand zwischen den Magnetflussverteilern bestimmen, über welche Höhe in z-Richtung und in welcher Stärke das homogene Magnetfeld ausgebildet wird, welches auf die Probe im Inneren der PVC-Form einwirkt.

Wird der Abstand zwischen den Magnetflussverteilern zu groß gewählt, so bildet sich kein homogenes Magnetfeld aus. Dies beeinflusst wiederum die Ausrichtung der Partikel in der Probe, so wie es in [2] beschrieben und in der Figur 2 dargestellt ist.

Die in der x-y-Ebene drehbare Permanentmagnetanordnung ist dabei über eine vertikale Aluminiumachse mit einem 3 V, 1,6 A 233 Oz-in bipolaren Schrittmotor (RobotShop Inc. Swanton, VT) verbunden. Über ein damit verbundenes Steuergerät können so Rotationen der Permanentmagnetanordnung von 0,05 bis 0,5 rpm um die z-Achse eingestellt werden.

### Aufgabe und Lösung

Die Aufgabe der Erfindung ist es, ein neues Design einer magnetischen Gefriergussvorrichtung bereit zu stellen, welches gegenüber den bislang bekannten Gefriergussvorrichtungen eine deutlich verbesserte Homogenität des angelegten magnetischen Feldes in Breite und Höhe (x-y- und z-Richtung) insbesondere auch für größere Probeaufnahmevorrichtung ermöglicht.

Zusätzlich sollte es die neue Gefriergussvorrichtung ermöglichen, eine Ausrichtung der Partikel auch außerhalb der x-y-Ebene zu bewirken.

Ferner ist es die Aufgabe der Erfindung, ein Verfahren bereit zu stellen, mit dem mit Hilfe der vorgenannten Vorrichtung eine poröse, keramische Komponente hergestellt werden kann, welche eine verbesserte mechanische Stabilität senkrecht zur Front der Gefrierbildung, d. h. quer zur Porenausrichtung aufweist.

Die Aufgaben der Erfindung werden gelöst durch eine Vorrichtung mit den Merkmalen des Hauptanspruchs, sowie durch ein Verfahren gemäß Nebenanspruch. Vorteilhafte Ausgestaltungen der Vorrichtung und des Verfahrens finden sich in den jeweils darauf rückbezogenen Ansprüchen wieder.

### Gegenstand der Erfindung

Es wurde herausgefunden, dass die Nachteile des bisherigen Standes der Technik zum Thema magnetischen Gefrierguss darauf zurückzuführen sind, dass sich gerade bei größeren Probeaufnahmevorrichtungen ein unvermeidbarer starker Magnetfeldgradient senkrecht zur Oberfläche des eingesetzten Magnets ausbildet, der immer nur für sehr kleine Bereiche kompensiert werden kann. Daraus resultieren nachteilig nur sehr kleine Bauteile, die für viele Anwendungen eher uninteressant sind.

Im Rahmen der Erfindung wird nunmehr vorgeschlagen, die negativen Auswirkungen des starken Magnetfeldgradienten senkrecht zur Oberfläche des eingesetzten Magnets vorteilhaft dadurch zu kompensieren, dass die Probe jeweils von mehreren Magneten umschlossen wird, wodurch ein dreidimensionales Magnetfeld entsteht, was insbesondere durch den Einsatz eines Halbach Magnet-Arrays als Permanentmagnet in einer Gefriergussvorrichtung realisiert werden kann.

Mit einem Halbach Magnet-Array können regelmäßig die höchst möglichen Magnetfelder pro Masse an Permanentmagnet erzielt werden. Gleichzeitig kann damit eine sehr gute Homogenität für den überwiegenden Teil im Inneren der Anordnung erzielt werden, wie aus H. Soltner, P. Blümler: "Dipolar Halbach magent stacks made from identically shaped permanent magnets for magnetic resonance" Concepts in Magnetic Resonance Part A, Vol. 36, Nr. 4 (2010) Seiten 211 - 222 [3] bekannt ist.

Im Rahmen dieser Erfindung ist unter einem Halbach Magnet-Array eine spezielle Anordnung von einzelnen Permanentmagneten zu verstehen, die es ermöglichen, dass sich der magnetische Fluss an der einen Seite der Anordnung fast aufhebt, auf der anderen Seite jedoch verstärkt. Halbach Magnete zeigen üblicherweise ein nur sehr geringes Streufeld und sind daher einfach und sicher zu handhaben.

In der Regel weisen Halbach Magnete die Form von durchbohrten Zylindern auf, was sie für viele praktische Anwendungen unattraktiv macht, da sie nur von solchen Objekten eingesetzt werden können, die im Inneren der Bohrung Platz finden. Für die Anwendung des Gefriergusses wird dieser Nachteil jedoch zum Vorteil.

Das in der Vorrichtung zum Gefriergießen eingesetzte, erfindungsgemäß wenigstens ein Halbach Magnet-Array mit variabler Intensität stellt sicher, dass auf das gesamte Probenvolumen ein homogenes Magnetfeld einwirkt. Gleichzeitig ist das Halbach Magnet-Array optional in unterschiedlichen Richtungen dreh- und/oder kippbar und kann zudem vorteilhaft auch an größere Probendurchmesser angepasst werden.

Die erfindungsgemäße Vorrichtung zum Gefriergießen einer keramischen Probe, umfasst ein Mittel zur Kühlung der Probe. Dies kann beispielsweise, ähnlich wie aus dem Stand der Technik bekannt, ein Kühlbad sein, welches insbesondere mit flüssigem Stickstoff gefüllt ist, und welches einen darin eintauchbaren Kühlfinger aus beispielsweise Kupfer, Aluminium oder Messing umfasst. Alternativ kann die Vorrichtung zum Gefriergießen ein regelbares Kühlbad umfassen, über das die Temperatur am Kühlfinger verändert werden und somit die Kühlrate variiert werden kann. Eine weitere Alternative als Mittel zur Kühlung ist beispielsweise eine gekühlte Stellfläche. Je nach Erstarrungstemperatur des eingesetzten Lösungsmittels reichen dort auch wenige Minusgrade um die Kristallbildung in der Probensuspension zu veranlassen.

Ferner weist die Vorrichtung eine Vorrichtung zur Aufnahme der Probe (Probeaufnahmevorrichtung) auf. Als Probeaufnahmevorrichtungen können beispielsweise Formen umfassend PVC (Polyvinylchlorid) oder PTFE (Polytetrafluorethylen) mit unterschiedlichen Durchmessern eingesetzt werden, wobei der Kühlfinger den Boden der Aufnahme darstellt.

Zusätzlich ist eine um die Probeaufnahme angeordnete, drehbare Permanentmagnetvorrichtung vorgesehen, wobei als Permanentmagnetvorrichtung erfindungsgemäß wenigstens ein ringförmig angeordnetes Halbach Magnet-Array eingesetzt wird.
In der einfachsten Ausführung dieser Erfindung setzt sich ein Halbach Magnet-Array aus einer Mehrzahl von Permanentmagneten zusammen, die ringförmig angeordnet sind. Bei geeigneter Ausrichtung der einzelnen Permanentmagneten kann auf diese Weise im Inneren des Rings ein starkes homogenes Magnetfeld erzeugt werden, während außerhalb des Rings das Magnetfeld nahezu verschwindet. Im Nachfolgenden wird die Ebene, die der Ring des Halbach Magnet-Arrays ausbildet, als x-y-Ebene betrachtet. Wesentlich ist, dass das Halbach Magnet-Array einen gemeinsamen Magnetnordpol und einen gemeinsamen Magnetsüdpol aufweisen.

Der Innendurchmesser der Anordnung des Halbach Magnet-Arrays bildet somit die obere Grenze für den Außendurchmesser der Probeaufnahme und legt somit auch den maximalen Probendurchmesser fest.

Erfindungsgemäß weist das Halbach Magnet-Array eine gerade Anzahl an Permanentmagneten auf, wobei wenigstens 4 Permanentmagnete gleichförmig in einem Ring angeordnet sind. Vorteilhaft können auch 8, 16 oder auch 32 Permanentmagnete gleichförmig in einem Ring angeordnet sein. Gleichförmig in einem Ring angeordnet bedeutet dabei, dass die Magnete gleichverteilt angeordnet sind und die Mittelpunkte der jeweiligen Magnete auf einer Kreislinie liegen. Je mehr Permanentmagnete innerhalb eines Rings angeordnet werden, desto aufwändiger wird die Vorrichtung.

Vorzugsweise weisen alle Permanentmagnete eine identische geometrische Form auf, beispielsweis ein regelmäßiges Achteck.

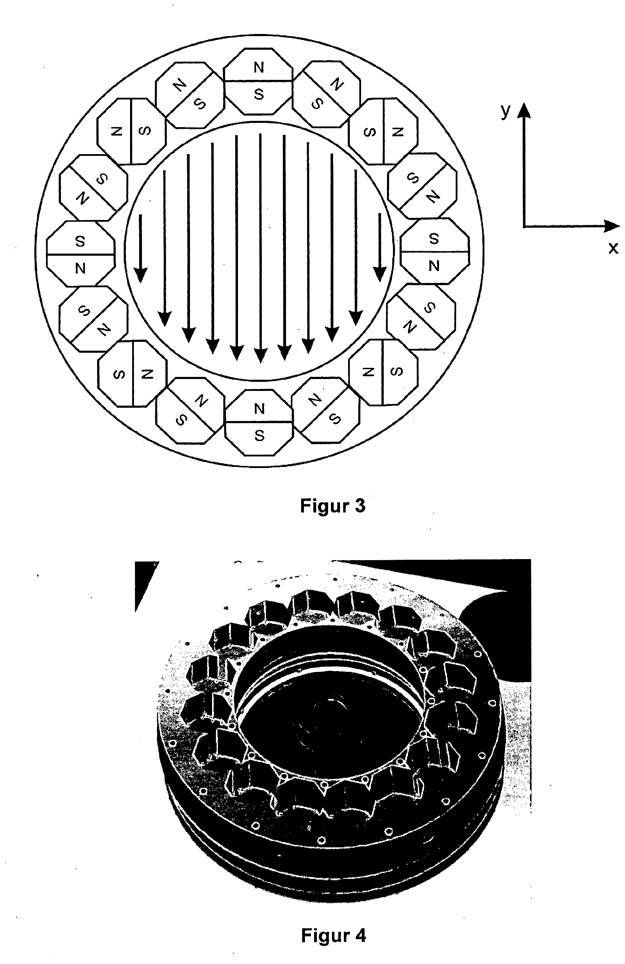

Bei den einzelnen Permanentmagneten ist die Magnetisierungsrichtung innerhalb der x-y-Ebene jeweils um einen bestimmten Winkel α gekippt und zwar derart, dass sich innerhalb des Rings mit den Permanentmagneten ein sehr starkes, homogenes Magnetfeld ausbildet, und sich außerhalb der ringförmig angeordneten Permanentmagneten das magnetische Feld schon in geringem Abstand abgeschwächt wird bzw. ganz verschwindet. Der einzustellende jeweilige Winkel α hängt dabei von der Anzahl x der eingesetzten Permanentmagnete nach der Formel a = 720°/x, d. h. bei 4 Permanentmagneten beträgt α gerade 180°. Bei 8 eingesetzten Permanentmagneten beträgt der Winkel α jeweils 90° und bei 32 eingesetzten Permanentmagneten ist α = 45°. In Figur 3 ist beispielshaft eine Anordnung mit 16 Permanentmagneten in einem erfindungsgemäßen Halbach Magnet-Array, die dazugehörige magnetische Ausrichtung der einzelnen Permanentmagneten sowie das daraus resultierende homogene Magnetfeld im Inneren des Halbach Magnet-Arrays dargestellt. Mit einer solchen Vorrichtung können beispielsweise homogene Magnetfelder von 0,5 bis 1 T bereitgestellt werden.

Im Rahmen dieser Anmeldung wird unter einem Permanentmagnet ein dauermagnetisches, hartmagnetisches Material verstanden. Dieses Material kann andere ferromagnetische (z. B. Eisen) oder ferrimagnetische Stoffe (z. B. Ferrite) anziehen. Dauermagnete besitzen an ihrer Oberfläche je einen oder mehrere Nord- und Südpol(e). Gleichnamige Pole zweier Permanentmagnete stoßen sich gegenseitig ab. Die magnetischen Kräfte eines Permanentmagneten hängen vor allem von der Größe der atomaren magnetischen Momente und von der Vollständigkeit der Ausrichtung sowie von der Größe der Austauschwechselwirkung ab.

Die für die erfindungsgemäße Vorrichtung geeigneten Permanentmagnete umfassen beispielsweise stark ferromagnetische Metalle, meist Seltenerdenlegierungen, wie Samarium-Kobalt oder Neodym-Eisen-Bor.

Vorteilhaft weisen alle innerhalb eines Rings angeordneten Permanentmagnete dieselbe Zusammensetzung, Geometrie und Magnetstärke und Magnetisierungsrichtung auf.

Die Höhe in z-Richtung, in der das homogene Magnetfeld ausgebildet wird, wird nunmehr anders als bei der Vorrichtung von Porter et al. nicht durch die Höhe der Magnetflussverteilers sondern von der Höhe der einzelnen Permanentmagnete des Halbach Magnet-Arrays in z-Richtung bestimmt.

Vorteilhaft weisen daher alle innerhalb eines Rings angeordneten Permanentmagnete auch dieselbe Höhe auf.

Das innerhalb der x-y-Ebene drehbar um die Probeaufnahmevorrichtung angeordnete Halbach Magnet-Arrays ist vorteilhaft über eine Kupplung mit einem Antriebsmotor verbunden und kann so in der x-y-Ebene um die Probeaufnahmevorrichtung gedreht werden.

Je nach Ausgestaltung der Höhe des Arrays ist zusätzlich eine vertikale Verschiebeeinrichtung in der z-Achse vorgesehen, damit sich das homogen Magnetfeld im Inneren des Halbach-Magnet-Arrays beispielsweise während der Herstellung der Keramik immer auf Höhe der Gefrierfront der Probe einstellen lässt. Dabei kann einerseits das Halbach Magnet-Array in Richtung der z-Achse verschiebbar sein, während die Probeaufnahmevorrichtung fixiert bleibt, oder aber auch das Halbach Magnet-Array fixiert sein während die Probeaufnahmevorrichtung in Richtung der z-Achse verschiebbar angeordnet ist. In einer besonderen Ausführungsform können auch sowohl das Halbach Magnet-Array als auch die Probeaufnahmevorrichtung entlang der z-Achse verschiebbar angeordnet sein. Wichtig ist, dass eine Relativbewegung zwischen der Probeaufnahmevorrichtung, und damit der darin angeordneten Probe, und des sie umgebenden Halbach Magnet-Arrays in z-Richtung einstellbar ist.

In einer besonderen Ausführungsform der Erfindung können auch mehr als ein Halbach Magnet-Array eingesetzt werden.

Für einen besonders homogenen Verlauf der Magnetisierung in z-Richtung, beispielsweise bei dickeren Schichtdicken, können beispielsweise zwei oder auch noch mehr identische Halbach-Arrays übereinander angeordnet werden, so dass der Bereich, in dem ein homogenes Magnetfeld angelegt werden kann, in z-Richtung deutlich vergrößert wird.

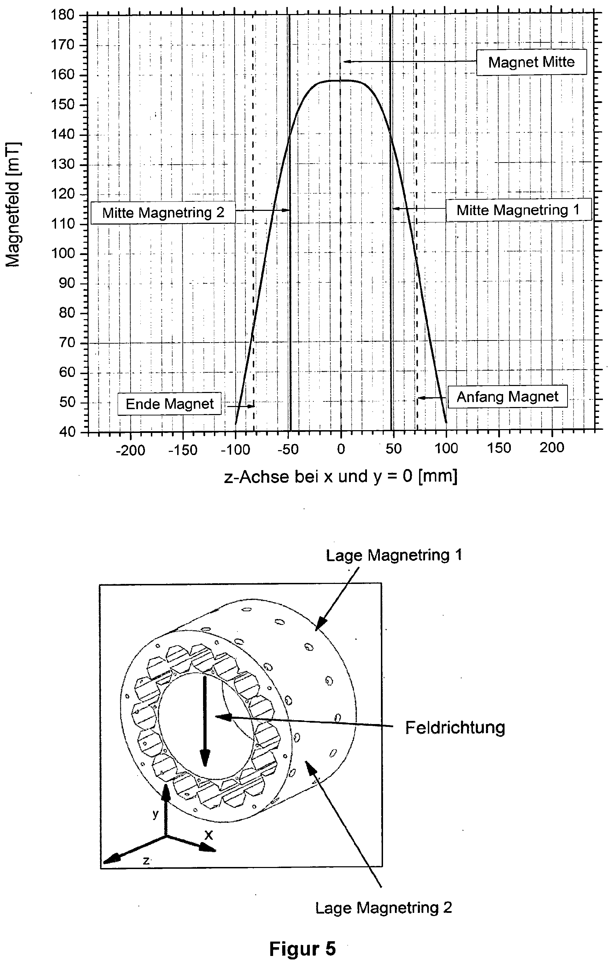

Da jedes Halbach Magnet-Array für sich in z-Richtung eine Magnetfeldstärkeverteilung in Form einer Glockenkurve über die Höhe aufweist, sieht eine vorteilhafte Ausgestaltung der Erfindung vor, dass wenigstens zwei solcher Halbach Magnet-Arrays übereinander angeordnet werden. Dadurch, dass sich die Glockenkurven der beiden Halbach Magnet-Arrays überschneiden, entsteht in z- Richtung zwischen den Maxima ein Plateau, an der die Magnetfeldstärke nahezu konstant ist. Dies ist in Figur 5 oben zu sehen. Die Figur 5 oben stellt das transversale Magnetfeld entlang der Mittelachse (z-Richtung) dar. Die beiden eingesetzten Halbach Magnet-Arrays sind dabei derart übereinander angeordnet (gekoppelt), dass ihre Magnetisierungsrichtungen identisch sind. In Figur 5 unten ist eine besondere Ausgestaltung mit zwei übereinander angeordneten Halbach Magnet-Arrays mit einer Vielzahl an einzelnen Permanentmagneten sowie der resultierenden Magnetisierungsrichtung dargestellt.

Bei der erfindungsgemäßen Vorrichtung ermöglicht die Drehung des wenigstens einen Halbach Magnet-Arrays in der x-y-Ebene um die Probeaufnahmevorrichtung vorteilhaft, dass ein dadurch erzeugtes homogenes Magnetfeld ebenfalls in der x-y-Ebene drehbar auf die Probe einwirkt, ähnlich, wie es bereits aus dem Stand der Technik von Porter et al. für einen Permanentmagneten bekannt ist. Insbesondere ist ein Antrieb vorzugsweise mit einer regelbaren Drehzahl zur Erzeugung einer Relativbewegung zwischen dem Halbach Magnet-Array und der Probeaufnahmevorrichtung vorhanden.

In einer besonderen Ausführungsform der Erfindung lässt die erfindungsgemäße Vorrichtung neben einer Drehung des erzeugten homogenen Magnetfeldes in der x-y-Ebene und einer Verschiebung in z-Richtung zudem optional eine Verkippung des Halbach Magnet-Arrays aus der x-y-Ebene entlang der z-Achse bis zu einem Winkel von max. ± 30° zu. Die real einzustellende Verkippung hängt unter anderen aber auch von der gewählten Probengröße ab. Durch ein Verkippen des Halbach Magnet-Arrays wird der nutzbare Innenraum für die Probe allerdings reduziert. Bei einem Verkippwinkel von 30° ergäbe das beispielsweise einen um ca. 25 % kleineren effektiven Probendurchmesser.

Dieses zusätzliche Verkippen des Halbach Magnet-Arrays gegenüber der Probeaufnahmevorrichtung in Kombination mit der ebenfalls möglichen Drehung innerhalb der Array-Ebene ermöglicht vorteilhaft die Einstellung einer Vielzahl von weiteren Parametern während des Gefriergießens. Damit kann insbesondere ein homogenes Magnetfeld in einer dritten Dimension eingestellt werden (3-dimensionales Gefriergießen).

Durch eine Verkippung des homogenen Magnetfeldes während der Herstellung der Keramik mit oder ohne zusätzliche Drehbewegung des Magnetfeld-Arrays kann somit eine gezielte Ausrichtung der Partikel, auch entsprechend des Kippwinkels, bewirkt werden. Damit können aufgrund der Kornausrichtung die mechanischen Eigenschaften für mehrachsige Belastung deutlich verbessert werden.

Insbesondere ließe sich so ein keramischer Träger auf spezielle Lastfälle hin optimieren, zum Beispiel um Biegemomente aufzunehmen.

Bei Einsatz von mehr als einem in z-Richtung gekoppelten Halbach Magnet-Arrays ist ebenfalls eine Verkippung vorgesehen. Je höher die Anordnung der gekoppelten Halbach Magnet-Arrays in z-Richtung ausfällt, desto stärker wirkt sich jedoch ein Verkippen auf die Verringerung des Probenvolumens aus.

Eine weitere vorteilhafte Ausgestaltung der Erfindung sieht vor, außerhalb eines wenigstens ersten Rings an Permanentmagneten, die ein erstes Halbach Magnet-Array ausbilden, einen weiteren Ring mit Permanentmagneten anzuordnen, die insofern ein zweites Halbach Magnet-Array mit einem größeren Durchmesser ausbilden. Dieses zweite Halbach Magnet-Array liegt in derselben Ebene wie das erste Halbach Magnet-Array und ist ebenfalls in der x-y-Ebene drehbar ausgestaltet. Vorteilhaft sind die Mittelpunkte des ersten und des zweiten Halbach Magnet-Arrays identisch.

Durch ein Verdrehen dieser beiden in der x-y-Ebene angeordneten Halbach Magnet-Arrays gegeneinander kann vorteilhaft die Magnetstärke des resultierenden Magnetfeldes im Inneren des inneren Halbach Magnet-Arrays, und damit innerhalb der Probeaufnahmevorrichtung und der Probe, während des Vorganges des Gefriergießens variiert werden.

Werden das erste und das zweite in der x-y-Ebene angeordneten Halbach Magnet-Arrays beispielsweise derart angeordnet, dass die jeweiligen gemeinsamen Magnetnordpole und -südpole in eine Richtung zeigen, so verstärkt sich das Magnetfeld im Inneren entsprechend ihrer jeweiligen Magnetstärke. Werden das erste und das zweite Halbach Magnet-Array derart angeordnet, dass der gemeinsame Magnetnordpol des inneren Arrays und der gemeinsame Magnetsüdpol des äußeren Magnet-Arrays in die gleiche Richtung zeigen, so heben sich die Magnetfelder entsprechend ihrer jeweiligen Magnetfeldstärke gegenseitig auf.

Im Fall, dass in z- Richtung ein gekoppeltes Halbach Magnet-Array eingesetzt wird, könnte in einer besonderen Ausgestaltung der Erfindung ein zweites ebenfalls gekoppeltes Halbach-Magnetfeld-Array eingesetzt werden, welches außerhalb des ersten gekoppelten Halbach Magnet-Arrays in derselben Ebene wie das erste gekoppelte Halbach Magnet-Array liegt und welches ebenfalls in der x-y-Ebene drehbar ausgestaltet ist. Vorteilhaft sind der Mittelpunkt des ersten gekoppelten und des zweiten gekoppelten Halbach Magnet-Arrays identisch.

In einer weiteren Ausgestaltung der Erfindung ist zwischen den Magneten eines Halbach-Arrays und der Probeaufnahmevorrichtung vorzugsweise wenigstens eine Abschirmung angeordnet, mit der ebenfalls das durch das Halbach Magnet-Array erzeugte homogene magnetische Feld, welches dann auf die Probe im Inneren der Probeaufnahmevorrichtung wirkt, variabel angepasst werden kann. Die Abschirmung umfasst insbesondere ein Metall, welches das erzeugte Magnetfeld regelmäßig abschwächt.

In einer besonders vorteilhaften Ausgestaltung liegt diese Abschirmung in Form eines metallischen Zylinders vor, der einfach zwischen die Probeaufnahme und das innere Halbach Magnet-Array angeordnet wird.

Erfindungsgemäß können zur Variation der Abschirmung eines oder mehrerer Halbach Magnet-Arrays auch mehrere Abschirmungszylinder eingesetzt werden. Alternativ können zur Variation der Abschirmung auch Abschirmungszylinder mit unterschiedlicher Wandstärke eingesetzt werden. Es können aber auch beide vorgenannten Alternativen kumulativ eingesetzt werden.
Eine weitere Ausgestaltung der Erfindung sieht eine Abschirmung in Form wenigstens eines metallischen Zylinders vor, der zwischen der Probeaufnahme und dem Inneren des Halbach Magnet-Array angeordnet ist und der regelmäßig durchbrochene Wände aufweist. Durch eine Relativbewegung von Abschirmung und Probeaufnahme kann auf diese Weise ebenfalls eine Variation des Magnetfelds auf die Probe ermöglicht werden.

Geeignete Materialien für eine solche metallische Abschirmung sind beispielsweise Bleche aus Weicheisen. Dazu gehören z. B. unlegierte Einsatzstähle, wie beispielsweise C10E, Baustähle, wie beispielsweise S235JR, oder Bleche aus Mu-Metall (Nickel-Eisen-Legierung, Permalloy, Conetics, Superalloy).
Das erfindungsgemäße Verfahren zum Betreiben der vorgenannten Vorrichtung zum Gefriergießen einer Keramik umfasst insbesondere die folgenden Schritte.

Bei Einsatz der erfindungsgemäßen Vorrichtung zum Gefriergießen einer keramischen Probe wird zunächst eine keramische Suspension in die Probeaufnahme gegeben. Als Lösungsmittel können wässrige oder kohlenwasserstoffhaltige Flüssigkeiten verwendet werden. Die keramischen Partikel können magnetisierbar sein bzw. andersartige, magnetisierbare Partikel hinzugegeben werden. Durch Eintauchen des mit dem Boden der Probeaufnahme verbundenen Kühlfingers in das Kühlbad setzt das Kristallwachstum des Lösungsmittels in der Suspension ein, welches sich vom Boden der Probeaufnahme in z-Richtung ausbreitet. Die Kühltemperatur kann dabei vorteilhaft durch ein Steuergerät kontrolliert werden.

Unabhängig vom Fortschreiten der Gefrierfront innerhalb der Probe in z-Richtung kann durch das Halbach Magnet-Array von außen ein starkes, homogenes Magnetfeld angelegt werden, welches auf die Probeaufnahmevorrichtung und die darin enthaltene Probe einwirkt.

Je nach Fragestellung kann beispielsweise während des Gefriergießens das Halbach Magnet-Array durch eine Relativbewegung in z-Richtung derart gesteuert werden, dass sich die Erstarrungsfront der Probe immer im Inneren des ausgebildeten homogenen Magnetfeldes befindet.

Zudem ist es auch möglich, während dieses Vorgangs das homogene Magnetfeld rotieren zu lassen.

Bei der Ausführungsform mit der zusätzlichen Option des Verkippens des Halbach Magnet-Arrays kann vorteilhaft der Einfluss eines schrägen, homogenen Magnetfeldes auf die Probe untersucht werden, wobei dabei auch noch zusätzlich eine Rotation in der x-y-Ebene erfolgen kann.

### Spezieller Beschreibungsteil

Es wurde eine Vorrichtung zum Gefriergießen in einem dreidimensionalen magnetischen Feld als eine Ausführungsform der Erfindung aufgebaut, die nachfolgend auch anhand weiterer Figuren näher erläutert wird, ohne dass die Erfindung auf diese Ausführungsform eingeschränkt werden soll. Einem Fachmann obliegt es, je nach Rahmenbedingungen entsprechende leichte Modifikationen vorzunehmen, ohne den Grundgedanken der vorliegenden Erfindung zu verlassen.

Die erfindungsgemäße Ausführungsform der Vorrichtung zum Gefriergießen einer keramischen Probe, umfasst ähnlich wie aus dem Stand der Technik bekannt, ein Kühlbad, welches mit flüssigem Stickstoff gefüllt ist, einen darin eintauchbaren Kühlfinger aus Kupfer sowie eine mit dem Kühlfinger verbundene PTFE-Probeaufnahmevorrichtung mit unterschiedlichen Außendurchmessern. Es wird eine Probeaufnahmevorrichtung mit 30 mm Innen- und 50 mm Außendurchmesser, sowie mit 120 mm Innen- und 158 mm Außendurchmesser eingesetzt.

Die Abkühlgeschwindigkeit der Kupferoberfläche des Kühlfingers am Boden der PTFE-Probeaufnahmevorrichtung wird durch eine Bandheizung und ein mit einem PID-Kontroller (proportional-integral-derivative controller) verbundenen Thermoelement überwacht und gesteuert. Bei dem Begriff Steuerung ist zu berücksichtigen, dass im vorliegenden Fall die Probe nicht mit einer definierten Kühlrate (K/s) heruntergekühlt wird, sondern lediglich die Kontakttemperatur zwischen Kühlfinger und Probe konstant gehalten wird, und sich daraus in Abhängigkeit von der Distanz zur Gefrierfront und der bei der Kristallisation freiwerdenden Wärme eine effektive Abkühlgeschwindigkeit ergibt. Der Kühlfinger ist hier gleichzeitig der Boden des Probengefäßes. Der Probengefäßmantel umfasst einen Zylinder aus PTFE.

Tendenziell erzielt man durch hohe Abkühlgeschwindigkeiten kleine und zahlreiche Kristallite, die nach dem Sublimieren des gefrorenen Lösungsmittels in einem feinporösen Gefüge mit vielen Kanälen resultiert. Langsame Abkühlgeschwindigkeiten führen zu wenigen, großen Kristalliten und einem grobporösen Gefüge.

Zusätzlich ist eine um die Probeaufnahme angeordnete, drehbare Permanentmagnetvorrichtung vorgesehen, wobei als Permanentmagnetvorrichtung erfindungsgemäß ein ringförmig angeordnetes, in der x-y-Ebene drehbares Halbach Magnet-Array eingesetzt wird. Dieses weist einen maximalen Innendurchmesser für die Aufnahme der Probeaufnahmevorrichtung von 16 cm auf.

Das verwendete Halbach Magnet-Array (siehe dazu die Figuren 3 und 4) umfasst 32 zylindrisch mit 8 Ecken geformte Neodym Selten Erden Magnete, grade N48M (H = 40 mm, Seitenlänge a = 15,95 mm, BVI Magnet GmbH), wobei jeweils zwei identische Magneten übereinander, zylindrisch angeordnet sind. Die 16 Doppelmagnete selbst sind in einer Ringform eingebettet und liegen auf einem Lager aus PTFE, in denen Messingkugeln laufen, die das magnetische Feld nicht nachteilig beeinflussen und somit eine Drehbewegung des Halbach Magnet-Arrays erlauben. Die Drehung wird über ein Reibrad realisiert, welches mit einem Motor (Faulhaber 2444S024B) verbunden ist. In diesem können Drehgeschwindigkeiten von 0,25 bis 20 rpm um die z-Achse über ein Potentiometer eingestellt werden. Die Drehgeschwindigkeit wird über ein Steuergerät (Faulhaber SC2804 S 3530) kontrolliert.

Die magnetische Feldstärke für die Probe wird über metallische Zylinder aus unlegiertem Einsatzstahl C10E eingestellt, die zwischen der Probeaufnahmevorrichtung und dem gekoppelten Halbach Magnet-Array angeordnet werden und so die Probe entsprechend abschirmen. Die Abschirmung variiert dabei mit der Wandstärke des Zylinders. Die Wandstärke kann einerseits über die Materialdicke, aber auch über die Verwendung mehrerer ineinandergesteckte, dünnwandige Zylinder, wodurch ein höherer Abschirmfaktor und damit eine stärkere Abschwächung des magnetischen Feldes resultiert. Der Abschirmfaktor bei der Verwendung eines einzelnen dickwandigen Zylinders aus unlegiertem Einsatzstahl C10E, mit dem Außendurchmesser von 150 mm und einer Höhe von 180 mm kann entsprechend Tabelle 1 variiert werden.

**Tabelle 1**

| | | | |
|---|---|---|---|
| Wandstärke [mm] | 1 | 5 | 10 |
| Magnetfeldstärke in der Probenmitte [mT] | 141,8 | 115,4 | 65,3 |
| Abschirmfaktor [-] | 1,0 | 1,3 | 2,2 |

Der Innendurchmesser der Anordnung des Halbach Magnet-Arrays beträgt 16 cm und bildet somit die obere Grenze für den Außendurchmesser der Probeaufnahmevorrichtung. Es wurden Probeaufnahmevorrichtungen mit Außendurchmessern von 50 mm bis 158 mm und Innendurchmessern von 30 mm bis 120 mm eingesetzt, wobei jeweils der Innendurchmesser gleichzeitig den Probendurchmesser bestimmt.

Für das Verfahren zur Herstellung von keramischen Komponenten mit gerichtet poröser Mikrostruktur mittels magnetfeldunterstütztem Gefrierguss, insbesondere unter Verwendung der erfindungsgemäßen Vorrichtung, werden keramische Schlicker benötigt. In einem solchen SchJicker befinden sich keramische Partikel in einer Suspension. Dazu werden die keramischen Partikel mit Hilfe eines Dispergierungsmittels in einem Lösungsmittel in der Schwebe gehalten um eine Sedimentation zu verhindern. Weiterhin ist ein Bindemittel notwendig, das dem Grünbauteil nach der Trocknung eine ausreichende mechanische Stabilität zur Weiterverarbeitung (z. B. Sinterung) verleiht.

Das eingesetzte Lösungsmittel ist im Wesentlichen vom eingesetzten Binder und dessen Löslichkeit in einem solchen abhängig. Die Wirksamkeit des Dispergiermittels richtet sich nach dem keramischen Material und dem eingesetzten Lösungsmittel.

Prinzipiell sind Kohlenwasserstoff und Wasser als Lösungsmittel möglich, wodurch ein breites Spektrum an Schmelzpunkten abgedeckt werden kann. Einige mögliche Kohlenwasserstoffe sind nachfolgend aufgelistet: Essigsäure, Propanon (Azeton), Butylazetat, N-Butylalkohol, Ethyleneglycolmonobutylether (C₄H₉OCH₂CH₂OH), Cyclohexanon, Diacetonalkohol, Diisobutylketon, N, N-Dimethylacetamid, N, Dimethylformamid, Dimethylester, Dimethylsulfoxid, Ethanol, Essigsäureethylester, 99 %ig, Essigsäureethylester, 85 %ig, Ethanol, 95 %ig oder wasserfrei, Dichlorethan, Ethylenglycol, Isophoron, Isopropanol, 95 %ig oder wasserfrei, Isopropylazetat, Methylazetat, Methylalkohol, Methylethylketon, Dichlormethan, Methyl-Isobutyl-keton, Naphtha (Leichtbenzinfraktion), n-Methyl-2-Pyrrolidon, Propylenchlorid, Dimethylsuccinate, Perchlorethylen, Tetrahydrofuran, Toluol, Mischung aus 60 Gew.-% Toluol und 40 Gew.-% Ethylalkohol, 95 %ig, 1,1,1-Trichloroethan, Xylol, Kampfer und Terbutylether.

Mögliche Bindersysteme für Lösungsmittel auf Alkoholbasis wären Bindersysteme auf der Basis von Polyvinylbutyral. Für wässrige Systeme eignen sich Ethylcellulose oder Polyethylenglykol.

Als Binder in dem hier vorliegenden wässrigen Schlickersystem wurden gut wasserlösliche Polyethylenglykole (z. B. PEG90) eingesetzt.

Die Beschaffenheit der einzusetzenden keramischen Pulver sollte mehreren Faktoren Rechnung tragen. Die Partikel müssen fein genug sein, um eine ausreichende Sinteraktivität für die spätere, notwendige Wärmebehandlung sicher zu stellen. Vorliegend wurden Pulver mit Partikelgrößen zwischen 0,1 und 5 µm verwendet. Bei magnetisierbaren Materialien, die sich im Magnetfeld ausrichten sollen, spielt das Aspekt-Verhältnis (Verhältnis von Höhe oder Länge zur kleinsten lateralen Ausdehnung) eine wichtige Rolle. Je größer das Aspekt-Verhältnis ist, desto besser sollten sich die Partikel im Magnetfeld ausrichten können (Hebelarm).

Nachfolgend sind in der Tabelle 2 drei Zusammensetzungen aufgeführt, wie sie als Probe eingesetzt wurden. Dabei ändert sich die Zusammensetzung der Schlicker aufgrund der Dichte der keramischen Materialien und der Dispergierbarkeit der Pulver. Die verwendeten Materialien werden in einem magnetischen Feld ausgerichtet. Insbesondere wegen der ausgebildeten Kristallstruktur und aufgrund des Umweltschutzes werden Untersuchungen mit wasserbasierten Schlickern durchgeführt.

**Tabelle 2:**

| | Masse (g) | Volumen (%) | Gewicht (%) |
|---|---|---|---|
| La_{0,6}Sr_{0,4}Co_{0,2}Fe_{0,8}O_{3-δ} | 25 | 30 | 72,75 |
| Wasser | 8,24 | 62,88 | 23,98 |
| Dispergierer | 0,5 | 3,18 | 1,46 |
| Binder (PEG 90) | 0,63 | 3,94 | 1,82 |
| | | | |

| | Masse (g) | Volumen (%) | Gewicht (%) |
|---|---|---|---|
| Ba_{0,5}Sr_{0,5}Co_{0,8}Fe_{0,2}O_{3-δ} | 25 | 25 | 65,54 |
| Wasser | 12,02 | 69,60 | 31,51 |
| Dispergierer | 0,5 | 2,41 | 1,31 |
| Binder (PEG 90) | 0,63 | 2,99 | 1,64 |
| | | | |

| | Masse (g) | Volumen (%) | Gewicht (%) |
|---|---|---|---|
| ZrO₂ | 30 | 25 | 63,21 |
| Fe₃O₄ | 0,93 | 0,85 | 1,95 |
| Wasser | 14,69 | 69,54 | 31,91 |
| Dispergierer | 0,62 | 2,44 | 1,30 |
| Binder (PEG 90) | 0,77 | 3,02 | 1,63 |

Die Beladung des Schlickers mit keramischen Partikeln kann zwischen 18 und 30 Vol.-% variiert werden, je nach angestrebter Porosität (der Wasseranteil wird entsprechend erhöht).

Nach Trocknung und Sinterung resultiert ein niedriger Anteil an keramischen Partikeln in einer hohen Porosität, eine hoher Anteil in niedriger Porosität. Zum Beispiel erzielt man mit 25 Vol.-% La_{0,6}Sr_{0,4}Co_{0,2}Fe_{0,8}O_{3-δ} eine Porosität von ca. 40 Vol.-% nach Trocknung und Sinterung bei 1280 °C.

Diese Schlicker werden blasenfrei in die Probenaufnahme gegossen und die Probenaufnahme mit dem Kühlkörper in z. B. flüssigem Stickstoff bei - 196 °C in der Mitte des Magnetringes platziert. Durch die Bandheizung kann die Temperatur an der Grenzfläche Schlicker/Probenaufnahme reguliert werden. Man erhält daraus eine grobe Abschätzung für die Abkühlrate des Schlickers. In den vorliegenden Fällen wurde der Kühlkörper, der in flüssigem Stickstoff eintaucht, über 0 °C aufgeheizt und dann die Temperatur mit 10 K/min abgesenkt. Die Geschwindigkeit, mit der die Gefrierfront bei einem eingestellten Temperaturgradienten voranschreitet, konnte nicht präzise ermittelt werden. Dies könnte aber leicht durch eine Mehrzahl von Messreihen und einer Verbesserung der Temperaturnahme ermöglicht werden.

Bei einem unbewegten/statischen Magnetfeld ist die Auswirkung des Temperaturgradienten lediglich in der Kristallitgröße des Eises zu sehen, da beim Gefrieren alle Partikel in dem Magnetfeld ausgerichtet sein sollten. Anders ist es bei rotierendem Magnetfeld, wo eine "Relativbewegung" zwischen dem Magnetfeld und der Gefrierfront stattfindet. Hier ist die Steigung der entstehenden Schraubenstruktur von den Parametern Drehgeschwindigkeit und Eisfrontgeschwindigkeit abhängig.

Sobald der Schlicker eingefroren ist, wird der Kühlkörper mit der Probenaufnahme in einen Gefriertrockner transferiert, wo das Lösungsmittel z. B. bei 1 mbar und - 20 °C (für Wasser) sublimiert wird. Nach der Trocknung kann die Probe aus der Probenaufnahme entfernt und weiter bearbeitet bzw. gesintert werden.

In dieser Anmeldung zitierte Literatur:
[1] M. M Porter et al., Materials Science & Engineering A, A 556 (2012) Seiten 741 - 750.
[2] Dissertation M. M Porter, Materials Science & Engineering, University of California, San Diego, 2014.
[3] H. Soltner, P. Blümler: "Dipolar Halbach magent stacks made from identically shaped permanent magnets for magnetic resonance", Concepts in Magnetic Resonance Part A, vol. 36, no. 4 (2010) Seiten 211 - 222.

## Patentansprüche

1. Vorrichtung zum Gefriergießen einer keramischen Probe in einem magnetischen Feld, umfassend
- ein Mittel zur Kühlung,
- eine mit dem Mittel zur Kühlung verbundene Probeaufnahmevorrichtung, und
- einen drehbar angeordneten Permanentmagneten,
***dadurch gekennzeichnet, dass***
- der Permanentmagnet in Form wenigstens eines ringförmig angeordneten Halbach Magnet-Arrays vorliegt, und
- das Halbach Magnet-Array in einer Ebene (x-y) drehbar um die Probeaufnahmevorrichtung angeordnet ist.

2. Vorrichtung nach Anspruch 1, bei dem das Halbach Magnet-Array eine geradzahlige Anzahl x von Permanentmagneten in einem Ring aufweist.

3. Vorrichtung nach einem der Ansprüche 1 bis 2, umfassend 8 Permanentmagnete, vorteilhaft 16 Permanentmagnete und insbesondere 32 Permanentmagnete, in einem Ring.

4. Vorrichtung nach einem der Ansprüche 1 bis 3, umfassend Neodym oder Samarium-Kobalt Magnete als Permanentmagneten.

5. Vorrichtung nach einem der Ansprüche 1 bis 4, bei dem die x Permanentmagnete eines Ringes gleich verteilt angeordnet sind und die Mittelpunkte der jeweiligen Permanentmagnete auf einer Kreislinie liegen.

6. Vorrichtung nach einem der Ansprüche 1 bis 5, bei der die Magnetisierungsrichtung benachbart angeordneter Permanentmagnete in einem Ring innerhalb der Ebene jeweils um einen bestimmten Winkel α gekippt ist und wobei α = 720°/x beträgt.

7. Vorrichtung nach einem der Ansprüche 1 bis 6, bei dem das drehbare Halbach Magnet-Array über eine Kupplung mit einem Antriebsmotor verbunden ist.

8. Vorrichtung nach einem der Ansprüche 1 bis 7, bei dem zwischen den Permanentmagneten des Halbach Magnet-Arrays und der Probeaufnahmevorrichtung eine metallische Abschirmung angeordnet ist.

9. Vorrichtung nach vorhergehendem Anspruch, mit einem metallischen Zylinder aus Weicheisen oder Bleche aus Mu-Metall als Abschirmung.

10. Vorrichtung nach einem der Ansprüche 1 bis 9, mit einem weiteren identischen Halbach Magnet-Array, welches in z-Richtung mit den ersten Halbach Magnet-Array gekoppelt ist und dieselbe Magnetisierungsrichtung aufweist.

11. Vorrichtung nach einem der Ansprüche 1 bis 10, mit einem weiteren drehbaren, um das erste Halbach Magnet-Array und in x-y-Ebene angeordneten Halbach Magnet-Array.

12. Vorrichtung nach einem der Ansprüche 1 bis 11, mit einem Kühlbad und einem Kühlfinger als Mittel zur Kühlung.

13. Vorrichtung nach einem der Ansprüche 1 bis 11, mit einer kühlbaren Stellfläche als Mittel zur Kühlung.

14. Vorrichtung nach einem der Ansprüche 1 bis 13, mit einem Mittel zur Verkippung des wenigstens einen Halbach Magnet-Arrays aus der x-y-Ebene entlang der z-Achse bis zu einem Winkel von max. ± 30°.

15. Verfahren zum Gefriergießen einer keramischen Probe,
mit den folgenden Schritten:
- eine keramische Suspension umfassend magnetisierbare Partikel wird in die Probeaufnahme einer Vorrichtung nach einem der Ansprüche 1 bis 14 gegeben,
- die Probeaufnahmevorrichtung wird mit dem Mittel zum Kühlen verbunden,
- während des Fortschreitens der Gefrierfront innerhalb der Probe in z-Richtung wird durch das Halbach Magnet-Array von außen ein starkes, homogenes Magnetfeld angelegt.

16. Verfahren nach vorhergehendem Anspruch,
bei dem während des Gefriergießens das Halbach Magnet-Array durch eine Relativbewegung in z-Richtung derart gesteuert wird, dass sich die Erstarrungsfront der Probe immer im Inneren des ausgebildeten homogenen Magnetfeldes befindet.

17. Verfahren nach einem der Ansprüche 15 bis 16,
bei dem das homogene Magnetfeld rotiert.

18. Verfahren nach einem der vorhergehenden Ansprüche 15 bis 17,
bei dem das Halbach Magnet-Arrays während des Gefriergießens verkippt wird.

19. Verfahren nach einem der vorhergehenden Ansprüche 15 bis 18,
bei dem das Verbinden der Probeaufnahmevorrichtung mit dem Mittel zum Kühlen über einen am Boden der Probeaufnahmevorrichtung angeordneten Kühlfinger und ein Kühlbad oder über eine gekühlte Stellfläche erfolgt.

## Claims

1. A device for freeze moulding a ceramic sample in a magnetic field, comprising
- a means for cooling,
- a sample receiving device connected to the means for cooling and
- a rotatably arranged permanent magnet,
**characterized in that**
- the permanent magnet is in the form of at least one annularly arranged Halbach magnet array, and
- the Halbach magnet array is arranged in a plane (x-y) so as to be rotatable about the sample receiving device.

2. The device according to claim 1, wherein the Halbach magnet array has an even number x of permanent magnets in a ring.

3. The device according to any one of claims 1 to 2, comprising 8 permanent magnets, advantageously 16 permanent magnets and in particular 32 permanent magnets, in a ring.

4. The device according to any one of claims 1 to 3, comprising neodymium or samarium-cobalt magnets as permanent magnets.

5. The device according to any one of claims 1 to 4, wherein the x permanent magnets of a ring are arranged in an evenly distributed manner and the midpoints of the respective permanent magnets lie on a circular line.

6. The device according to any one of claims 1 to 5, wherein the magnetization direction of adjacently arranged permanent magnets in a ring within the plane is in each case tilted by a certain angle α and wherein α = 720 °/x.

7. The device according to any one of claims 1 to 6, wherein the rotatable Halbach magnet array is connected to a driving motor via a coupling.

8. The device according to any one of claims 1 to 7, wherein a metallic shield is arranged between the permanent magnets of the Halbach magnet array and the sample receiving device.

9. The device according to the preceding claim, having a metallic cylinder of soft iron or sheets of mu-metal as shield.

10. The device according to any one of claims 1 to 9, having a further identical Halbach magnet array which is coupled in the z-direction to the first Halbach magnet array and has the same magnetization direction.

11. The device according to any one of claims 1 to 10, having a further rotatable Halbach magnet array around the first Halbach magnet array and arranged in the x-y-plane.

12. The device according to any one of claims 1 to 11, having a cooling bath and a cooling finger as means for cooling.

13. The device according to any one of claims 1 to 11, having a coolable footprint as means for cooling.

14. The device according to any one of claims 1 to 13, having a means for tilting the at least one Halbach magnet array from the x-y-plane along the z-axis up to an angle of max. ± 30°.

15. A method for freeze moulding a ceramic sample, having the following steps:
- a ceramic suspension comprising magnetizable particles is placed in the sample receiving of a device according to any one of claims 1 to 14,
- the sample receiving device is connected to the means for cooling,
- as the freezing front progresses within the sample in the z-direction, a strong, homogeneous magnetic field is applied from the outside by the Halbach magnet array.

16. The method according to the preceding claim, wherein, during the freeze moulding, the Halbach magnet array is controlled by a relative movement in the z-direction in such a way that the solidification front of the sample is always inside the homogeneous magnetic field formed.

17. The method according to any one of claims 15 to 16, wherein the homogeneous magnetic field rotates.

18. The method according to any one of preceding claims 15 to 17, wherein the Halbach magnet array is tilted during the freeze moulding.

19. The method according to any one of preceding claims 15 to 18, wherein the connection of the sample receiving device to the means for cooling is performed via a cooling finger, which is arranged at the bottom of the sample receiving device, and a cooling bath or via a cooled footprint.

## Revendications

1. Dispositif de coulée par congélation d'un échantillon céramique dans un champ magnétique, comprenant :
- un moyen de refroidissement,
- un dispositif de logement d'échantillon, relié au moyen de refroidissement, et
- un aimant permanent monté tournant,
**caractérisé en ce que**
- l'aimant permanent se présente sous la forme d'au moins un réseau d'aimants d'Halbach disposés annulairement, et
- le réseau d'aimants d'Halbach est monté tournant dans un plan (x-y) autour du dispositif de logement d'échantillon.

2. Dispositif suivant la revendication 1, dans lequel le réseau d'aimants d'Halbach a un nombre x pair d'aimants permanents suivant un anneau.

3. Dispositif suivant l'une des revendications 1 à 2, comprenant 8 aimants permanents, de préférence 16 aimants permanents, et notamment 32 aimants permanents suivant un anneau.

4. Dispositif suivant l'une des revendications 1 à 3, comprenant des aimants au néodyme ou au samarium-cobalt comme aimants permanents.

5. Dispositif suivant l'une des revendications 1 à 4, dans lequel les x aimants permanents d'un anneau sont répartis d'une manière uniforme et les centres des aimants permanents respectifs sont sur un cercle.

6. Dispositif suivant l'une des revendications 1 à 5, dans lequel le dispositif d'aimantation d'aimants permanents voisins dans un anneau dans le plan est basculé respectivement d'un angle α déterminé et dans lequel α = 720°/x.

7. Dispositif suivant l'une des revendications 1 à 6, dans lequel le réseau d'aimants d'Halbach tournant est relié à un moteur d'entraînement par un accouplement.

8. Dispositif suivant l'une des revendications 1 à 7, dans lequel un blindage métallique est disposé entres les aimants permanents du réseau d'aimants d'Halbach et le dispositif de logement d'échantillon.

9. Dispositif suivant la revendication précédente, comprenant un cylindre métallique en fer doux ou des tôles en métal Mu comme blindage.

10. Dispositif suivant l'une des revendications 1 à 9, comprenant un autre réseau d'aimants d'Halbach pareil, qui est couplé dans la direction z au premier réseau d'aimants d'Halbach et qui a la même direction d'aimantation.

11. Dispositif suivant l'une des revendications 1 à 10, comprenant un autre réseau d'aimants d'Halbach tournant disposé autour du premier réseau d'aimants d'Halbach et dans le plan x-y.

12. Dispositif suivant l'une des revendications 1 à 11, comprenant un bain de refroidissement et un doigt de refroidissement comme moyen de refroidissement.

13. Dispositif suivant l'une des revendications 1 à 11, comprenant une surface réglable pouvant être refroidie comme moyen de refroidissement.

14. Dispositif suivant l'une des revendications 1 à 13, comprenant un moyen de basculement du au moins un réseau d'aimants d'Halbach, hors du plan x-y, suivant l'axe z d'un angle allant jusqu'à un maximum de ± 30°.

15. Procédé de coulée par réfrigération d'un échantillon céramique,
comprenant les stades suivants :
- on met une suspension de céramique comprenant des particules magnétisables dans le logement d'échantillon d'un dispositif suivant l'une des revendications 1 à 14,
- on relie le dispositif de logement d'échantillon au moyen de refroidissement,
- pendant la progression du front de congélation au sein de l'échantillon dans la direction z, on applique un champ magnétique homogène, intense, de l'extérieur par le réseau d'aimants d'Halbach.

16. Procédé suivant la revendication précédente,
dans lequel, pendant la coulée par congélation, on commande le réseau d'aimants d'Halbach par un mouvement relatif dans la direction z, de manière à ce que le front de solidification de l'échantillon se trouve toujours à l'intérieur du champ homogène constitué.

17. Procédé suivant l'une des revendications 15 à 16,
dans lequel le champ magnétique homogène tourne.

18. Procédé suivant l'une des revendications précédentes 15 à 17, dans lequel on fait basculer le réseau d'aimants d'Halbach pendant la coulée par congélation.

19. Procédé suivant l'une des revendications précédentes 15 à 18, dans lequel la liaison du dispositif de logement d'échantillon au moyen de refroidissement s'effectue par un doigt de refroidissement disposé au fond du dispositif de logement d'échantillon et par un bain de refroidissement ou par une surface de réglage refroidie.
